# DEMANDE DE BREVET EUROPEEN

(11) **EP 1 004 963 A1**
(43) Date de publication de la demande: **31.05.2000**
(21) Numéro de dépôt: 99402942.9
(22) Date de dépôt: 26.11.1999
(51) Int. Cl.: G06F 9/46, G06F 11/273

(54) **Outil de gestion de disponibilités de ressources.**

(30) Priorité: 27.11.1998 FR 9814938
(71) Demandeur: BULL S.A., 78434 Louveciennes Cedex (FR)
(72) Inventeur: Petersen, Axel, 75016 Paris (FR); Urbain, Francois, 75002 Paris (FR)
(74) Mandataire: Denis, Hervé

(57) **Abrégé**

L'outil (10) de gestion de disponibilités de ressources (20), comprenant une liste (13) de disponibilités à solliciter (Disp.1, Disp.3, Disp.4), des blocs (14) de méthodes désignées (Md.1-Md.3) dans la liste (13) et exécutées pour obtenir des premières données binaires (D1, D3, D4) représentatives des disponibilités sollicitées à des instants déterminés, l'outil comportant des moyens de liaison (16) à au moins un composant d'administration (32) générateur de secondes données binaires (D2, D5) représentatives de disponibilités (Disp.2, Disp.5) sollicitées à des instants déterminés ou déduites par le composant d'administration, la liste (13) de l'outil (10) désignant aussi des disponibilités sollicitées par le composant d'administration, l'outil incluant en outre des cases (15) pour recevoir les premières et secondes données binaires, des compteurs cumulés (17) et un dispositif (18) connecté aux cases (15) pour la mise à jour des compteurs cumulés.

## Description

### Domaine technique.

L'invention se rapporte à la gestion informatique de disponibilités de ressources. Une ressource est un composant matériel ou logiciel dont une disponibilité peut être établie à distance de l'outil. L'invention a pour objet un outil de gestion de disponibilités de ressources, qui est à la fois fait d'un matériel et d'un logiciel. Le matériel est fait ordinairement d'au moins un processeur et de moyens de mémoire. L'outil fournit des données servant à l'administration de l'ensemble des ressources. L'invention a donc pour objet corollaire un système d'administration incluant l'outil.

### L'art antérieur.

La disponibilité d'une ressource définit de façon binaire un état donné de la ressource. L'état peut être par exemple l'état de marche ou d'arrêt de la ressource, ou un état de fonctionnement particulier de la ressource défini selon des critères donnés. La disponibilité est générée par une méthode, qui est une partie logicielle configurable permettant d'accéder à l'état d'une ressource par une requête, ou par un scénario, qui est une suite de requêtes. Pour des raisons de commodité, la suite du texte ne considérera que la méthode, sachant que le scénario peut aussi convenir. La requête est envoyée directement sur la ressource et est établie à distance, ordinairement par l'intermédiaire d'un réseau de communication. Une requête définit de façon binaire la disponibilité d'une ressource. La disponibilité est établie à partir de la réponse de la ressource à la requête d'une méthode. Si la ressource ne répond pas à la requête ou si la réponse reçue correspond à l'état défini comme indisponible, la ressource est dite indisponible.

La disponibilité est utilisée à deux niveaux. Le premier niveau établit les données instantanées de disponibilité tandis que le second niveau gère dans le temps les données instantanées du premier niveau. L'outil de gestion de disponibilité permet ainsi de faire des statistiques pour améliorer le fonctionnement des ressources existantes ou pour concevoir des ressources plus performantes.

Actuellement, les outils de gestion de disponibilité sont à la fois des outils de premier et second niveaux. Ces outils permettent d'obtenir des données instantanées de disponibilité avec des méthodes prédéterminées et de traiter ces données instantanées.

D'autre part, il faut distinguer entre les données instantanées sollicitées directement ou indirectement, par l'intermédiaire de composants de médiation, avec les méthodes de l'outil et les données instantanées non sollicitées par l'outil.

En ce qui concerne les données sollicitées indirectement, un composant de médiation est un composant logiciel indépendant d'un outil de gestion de disponibilité et fournissant des données de disponibilité sur au moins une ressource dont la disponibilité ne peut être établie directement. Par exemple, la disponibilité d'une application vue d'un utilisateur final peut être obtenue par un composant de médiation constitué par une sonde fonctionnant sous un protocole d'échange de données d'administration de réseau et, par extension, de système, connu sous le nom SNMP (Simple Network Management Protocol). Une méthode de l'outil émet une requête au composant de médiation, qui traite cette requête pour obtenir la valeur de retour et la transmettre à l'outil de gestion de disponibilité.

Les données non sollicitées sont aussi établies dans un composant extérieur à l'outil de gestion de disponibilité, mais elles ne sont pas sollicitées avec des méthodes de l'outil. Un tel composant est ordinairement un composant d'administration, notamment un composant de corrélation de données et d'événements d'administration.

Actuellement, les outils de gestion de disponibilité sont incapables de gérer les données non sollicitées. Cette impossibilité oblige à ajouter dans l'outil des mécanismes qui peuvent exister déjà dans un outil d'administration. Cet ajout est redondant, nécessite un outil plus puissant et s'avère donc plus coûteux.

Une autre solution serait de traiter avec un autre outil non des données non sollicitées mais des événements non sollicités. Dans ce cas, la gestion de la disponibilité consiste à stocker les événements non sollicités pendant une période donnée, une journée par exemple, et à les traiter ultérieurement en groupe de façon à produire des indicateurs de disponibilité en temps différé. Dans une variante, les indicateurs sont les résultats de compteurs. Comme inconvénient de cette variante, les compteurs peuvent être remis à zéro de manière périodique. Ceci limite donc la persistance des données dans le compteurs. Les indicateurs disparaissent à la fin de la période donnée et peuvent induire des pertes de données s'ils ne sont pas traités avant la fin de la remise à zéro.

### Sommaire de l'invention.

Un but de l'invention est de construire un outil de gestion de disponibilité capable de gérer des données de disponibilité non sollicitées par l'outil.

Un autre but de l'invention est de fournir des indicateurs de disponibilité en temps réel.

Un autre but est d'obtenir la persistance des compteurs.

L'invention a pour objet un outil de gestion de disponibilités de ressources, comprenant au moins un processeur et des moyens de mémoire incluant une liste de disponibilités à solliciter, des blocs de méthodes désignées dans la liste et exécutées par le processeur pour obtenir des premières données binaires représentatives des disponibilités sollicitées à des instants déterminés, l'outil comportant des moyens de liaison à au moins un composant d'administration générateur de secondes données binaires représentatives de disponibilités sollicitées à des instants déterminés ou déduites par le composant d'administration, la liste de l'outil désignant aussi des disponibilités sollicitées par le composant d'administration, les moyens de mémoire incluant aussi des cases pour recevoir les premières et secondes données binaires, des compteurs cumulés et un dispositif connecté aux cases pour la mise à jour des compteurs cumulés.

L'invention a aussi pour objet corollaire un système d'administration de ressources, caractérisé en ce qu'il inclut un outil de gestion de disponibilités et un composant d'administration tels que définis précédemment.

Les caractéristiques et avantages de l'invention ressortent de la description qui suit, donnée à titre d'exemple et faite en référence aux dessins annexés.

### Présentation des dessins.

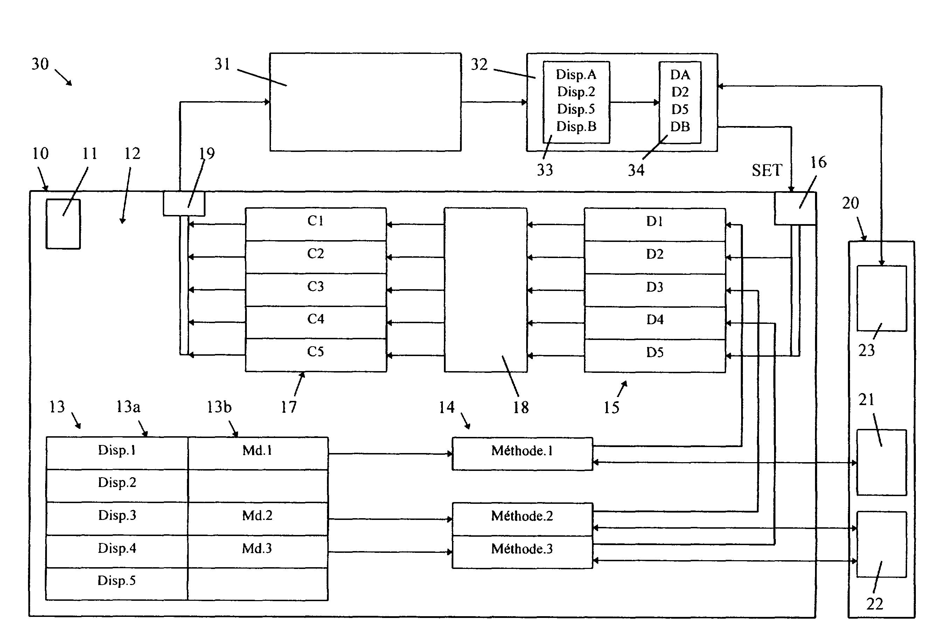

La figure unique est une vue schématique de la structure d'un outil conforme à l'invention pour la gestion de la disponibilité de ressources. Elle illustre aussi sous forme synoptique un système d'administration conforme à l'invention.

### Description détaillée d'un exemple illustrant l'invention.

La figure représente sous forme très schématique une structure d'un outil 10 de gestion de la disponibilité d'un ensemble 20 de ressources. L'outil 10 illustré est un composant d'un système d'administration 30 comprenant aussi un composant 31 de traitement de données d'administration et un composant 32 de corrélation de données et d'événements d'administration.

L'ensemble 20 de ressources qui est illustré à titre indicatif se compose de deux ressources individuelles 21 et 22 en liaison bidirectionnelle avec l'outil 10 pour y solliciter des données instantanées et d'un groupe 23 de ressources en liaison bidirectionnelle avec le composant de corrélation 32. L'outil 32 contient, pour les seuls besoins de l'invention, une liste 33 désignant des disponibilités relatives aux ressources du groupe 23 et une liste de données instantanées relatives aux disponibilités. Il est à noter que le composant 32 étant dans l'exemple illustré et réalisé un composant de corrélation de données et d'événements d'administration, les disponibilités sont déduites par corrélation. Cependant, de manière générale, le composant 33 pourrait être simplement un composant d'administration dans lequel les disponibilités de la liste 33 sont sollicitées à des instants déterminés. Les deux cas posent le même problème de pouvoir utiliser dans l'outil 10 tout ou partie des données de la liste 34.

L'outil 10 comprend au moins un processeur 11 et des moyens de mémoire 12. L'outil inclut une liste 13 formée dans les moyens de mémoire 12 d'un tableau à deux colonnes 13a, 13b, la première colonne 13a indiquant les désignations Disp.i des disponibilités à solliciter, au nombre de cinq seulement suffisant pour servir d'exemple Disp.1-Disp.5. Les moyens de mémoire 12 incluent aussi des blocs 14 de méthodes Méthode.i, trois dans l'exemple illustré, Méthode. l-Méthode.3, dont les noms respectifs Md.i (Md.1-Md.3) sont désignés dans la seconde colonne 13b de la liste 13. Les méthodes sont exécutées par le processeur 11 pour obtenir des données binaires respectives D1, D3 et D4 représentatives de disponibilités sollicitées Disp.1, Disp.3 et Disp.4 à des instants déterminés. Les blocs de méthodes sont donc en liaison avec les ressources 21 et 22 sur lesquelles elles s'appliquent. L'obtention des données instantanées peut être directe ou indirecte par l'intermédiaire d'un composant de médiation ordinairement incorporé à la ressource et non illustré. Des cases de mémoire 15 d'état courant sont contenues dans les moyens de mémoire 12 pour recevoir les données binaires D1, D3 et D4. L'outil 10 comporte des moyens de liaison 16 au composant de corrélation 32. Le composant 32 est générateur de données binaires DA, D2, D5, DB contenues dans la liste 34 et représentatives de disponibilités Disp.A, Disp.2, Disp.5, Disp.B de la liste 33, sollicitées à des instants déterminés ou déduites par le composant 32. Il est à noter que la liste de disponibilités 13 désigne aussi dans la colonne 13a des disponibilités Disp.2 et Disp.5 contenues dans la liste 33 et donc sollicitées ou déduites par le composant de corrélation 32. Les moyens de mémoire 12 de l'outil 10 contiennent aussi d'autres cases d'état 15 pour recevoir du composant de corrélation 32 les données binaires D2 et D5 de la liste 34. Enfin, les moyens de mémoire ont de manière classique des compteurs cumulés 17 connectés aux cases d'état respectives 15 pour déterminer des taux de disponibilité R1-R5 des disponibilités respectives Disp.1-Disp.5, ainsi qu'un dispositif 18 pour la mise à jour des compteurs cumulés 18. Les compteurs 17 sont aussi des cases de mémoire, dont les valeurs sont incrémentées sur la commande d'un algorithme produit par le dispositif 18. L'outil 10 inclut aussi des moyens 19 de liaison au composant 31 du système d'administration 30.

Quand les disponibilités Disp.1, Disp.3 et Disp.4 désignées dans la colonne 13a de la liste 13 sont en correspondance avec des noms de méthodes Md.1-Md.3, les cases respectives 15 ont la capacité d'être modifiées par les méthodes activées correspondantes Méthode.1, Méthode.2 et Méthode.3. Quand une disponibilité Disp.2, Disp.5 désignée dans la liste 13 n'est pas en correspondance avec un nom de méthode, la case mémoire correspondante a la capacité d'être modifiée de l'extérieur de l'outil 10.

Dans l'exemple réalisé, les composants 31 et 32 étaient des composants connus sous le nom de marque déposée OpenMaster par le demandeur. Ces composants fonctionnent sous le protocole SNMP. Ce protocole comprend trois opérateurs, dont l'opérateur SET. Avec l'opérateur SET, l'émetteur demande au récepteur de modifier la donnée spécifiée dans le message pour la faire correspondre à la valeur spécifiée dans le message. En l'occurrence, le composant de corrélation 32 envoie à l'outil 10 une opération SET pour modifier la valeur de l'état courant dans la case 15 correspondant à la ressource indiquée dans le message. D'autres protocoles sont possibles, tels que le protocole CMIP (Common Management Information Protocol). De façon générale, on peut dire que des cases d'état 15 reçoivent les données binaires D2 et D5 de la liste 34 du composant 32 par exécution d'une opération consistant à modifier les données préexistant dans ces cases pour correspondre aux données binaires D2 et D5. De préférence, cette opération est faite à l'initiative du composant de corrélation 32.

De préférence aussi, la liste 13, les cases 15 et les compteurs 17 sont visibles à l'extérieur de l'outil 10. Dans l'exemple illustré, ils forment une base d'information d'administration plus connue sous l'appellation de base MIB (Management Information Base). Cette caractéristique offre l'avantage au composant de corrélation 32 de pouvoir modifier dans la liste 13 de l'outil 10 les désignations de ses disponibilités non sollicitées par l'outil 10. La modification consiste à modifier ou supprimer une désignation existante et/ou à ajouter une désignation. Sans cette option, la liste 13 peut être modifiée par l'intermédiaire d'un fichier de configuration.

De façon plus générale, il ressort de la description précédente que les composants 31 et 32 du système d'administration 30 pourraient ne former qu'un seul composant, de même que l'outil 10 pourrait être incorporé dans au moins l'un de ces composants, ou dans d'autres composants d'un système d'administration. Dans le système 30, l'outil 10 et les composants 31 et 32 sont connectés pour former une boucle.

Comme avantages, l'invention satisfait aux trois buts définis précédemment. L'outil 10 est capable de gérer des données de disponibilité non sollicitées par l'outil, cela de façon simple et efficace. En outre, l'outil 10 fournit des indicateurs de disponibilité en temps réel et offre à l'évidence une persistance des compteurs.

## Revendications

1. Outil (10) de gestion de disponibilités de ressources (20), comprenant au moins un processeur (11) et des moyens de mémoire (12) incluant une liste (13) de disponibilités à solliciter (Disp.1, Disp.3, Disp.4), des blocs (14) de méthodes désignées (Md.1-Md.3) dans la liste (13) et exécutées par le processeur (11) pour obtenir des premières données binaires (D1, D3, D4) représentatives des disponibilités sollicitées à des instants déterminés, l'outil comportant des moyens de liaison (16) à au moins un composant d'administration (32) générateur de secondes données binaires (D2, D5) représentatives de disponibilités (Disp.2, Disp.5) sollicitées à des instants déterminés ou déduites par le composant d'administration, la liste (13) de l'outil (10) désignant aussi des disponibilités sollicitées par le composant d'administration, les moyens de mémoire (12) incluant aussi des cases (15) pour recevoir les premières et secondes données binaires, des compteurs cumulés (17) et un dispositif (18) connecté aux cases (15) pour la mise à jour des compteurs cumulés.

2. Outil selon revendication 1, dans lequel des cases (15) reçoivent les secondes données binaires du composant d'administration par exécution d'une opération (SET) consistant à modifier les données préexistantes des cases pour correspondre aux secondes données binaires.

3. Outil selon la revendication 2, dans lequel l'opération est faite à l'initiative du composant d'administration.

4. Outil selon l'une des revendications 1 à 3, dans lequel la liste (13), les cases (15) et les compteurs cumulés (17) sont visibles de l'extérieur de l'outil.

5. Outil selon la revendication 4, dans lequel la liste (13), les cases (15) et les compteurs cumulés (17) forment une base d'information d'administration (MIB).

6. Système d'administration (30) de ressources (20), caractérisé en ce qu'il inclut un outil (10) de gestion de disponibilités de ressources et un composant d'administration (32) tels que définis dans l'une des revendications 1 à 5.

7. Système selon la revendication 6, caractérisé en ce que le composant d'administration (32) est un composant de corrélation de données et d'événements d'administration déduisant les disponibilités (Disp.2, Disp.5).

8. Système selon la revendication 6, caractérisé en ce que le composant d'administration (32) est un composant générateur de secondes données binaires (D2, D5) représentatives de disponibilités (Disp.2, Disp.5) sollicitées à des instants déterminés.

9. Système selon l'une des revendications 6 à 8, caractérisé en ce que l'outil (10) a des moyens (19) de liaison à un composant de traitement de données d'administration (31) connecté en sortie avec le composant de corrélation (32).
